# FASCICULE DE BREVET EUROPEEN

(11) **EP 3 956 551 B1**
(45) Date de publication et mention de la délivrance du brevet: **17.07.2024**
(21) Numéro de dépôt: 20713650.8
(22) Date de dépôt: 27.03.2020
(51) Int. Cl.: F02B 31/04, F02F 1/42, F01L 3/06, F02M 35/108, F02B 31/08, F02B 23/10, F02M 35/10

(54) **DISPOSITIF D'ADMISSION DE GAZ POURVU D'UN MASQUE ORIENTE**
GASANSAUGEINRICHTUNG MIT ORIENTIERTER MASKE
GAS INTAKE DEVICE WITH ORIENTED MASK

(30) Priorité: 16.04.2019 FR 1904025
(43) Date de publication de la demande: 23.02.2022
(73) Titulaire: IFP Energies nouvelles, 92852 Rueil-Malmaison (FR)
(72) Inventeur: GAUTROT, Xavier, 92852 RUEIL-MALMAISON CEDEX (FR); TROST, Julien, 92852 RUEIL-MALMAISON CEDEX (FR); RITTER, Martin, 92852 RUEIL-MALMAISON CEDEX (FR); KRIEGER, Arnaud, 92852 RUEIL-MALMAISON CEDEX (FR); LUCA, Paul-Georgian, 92852 RUEIL-MALMAISON CEDEX (FR)
(74) Mandataire: IFP Energies nouvelles
(86) Numéro de dépôt international: PCT/EP2020/058714
(87) Numéro de publication internationale: WO 2020/212117

(56) Documents cités:
- EP-A1- 0 537 745
- WO-A1-2015/033205
- DE-U1- 202014 007 837
- FR-A1- 2 898 643
- FR-A3- 2 924 165
- JP-A- 2007 162 517

## Description

### Domaine technique

La présente invention concerne le domaine des dispositifs d'admission de gaz pour un moteur à combustion interne. La présente invention concerne en particulier les dispositifs d'admission de gaz permettant de générer un mouvement aérodynamique de gaz dans le cylindre du moteur.

Ce type de moteur comprend généralement au moins un cylindre, un piston coulissant dans ce cylindre en un mouvement rectiligne alternatif, des moyens d'admission d'un comburant, des moyens d'échappement de gaz brûlés, une chambre de combustion, et des moyens d'injection pour injecter un combustible.

Comme cela est généralement admis, lors de la conception d'un moteur, les contraintes de performances et d'émissions de polluants sont de plus en plus fortes et il convient donc de trouver de nouvelles solutions pour augmenter le rendement final du moteur.

L'augmentation du rendement de combustion est donc un point clé pour limiter les émissions polluantes à performances égales ou supérieures. Pour cela, l'utilisation de la totalité du carburant présent dans la chambre de combustion, par un comburant comprenant par exemple de l'air à pression ambiante, de l'air suralimenté, ou un mélange d'air (suralimenté ou non) et de gaz brûlés recirculés, est d'une grande importance.

En effet, il est nécessaire que le mélange carburé (comburant/combustible) dans la chambre de combustion soit le plus homogène possible.

De plus, afin d'assurer un bon rendement ainsi qu'une bonne vitesse de combustion il est souhaitable d'avoir un haut niveau de turbulence, et plus spécifiquement un haut niveau d'énergie cinétique turbulente, à l'instant de l'allumage du mélange carburé et au cours de la combustion qui suit.

Ce niveau de turbulence élevé peut être atteint grâce à l'emploi d'une aérodynamique d'admission particulière, le swumble. Ce type d'aérodynamique se caractérise par le fait que le mouvement macroscopique du mélange carburé est un composé de swirl (mouvement rotatif des gaz dans le cylindre autour d'un axe vertical cylindre) et de tumble (mouvement rotatif des gaz dans le cylindre selon un axe longitudinal moteur).

Le swirl, qui est un mouvement macroscopique de rotation du mélange carburé autour d'un axe colinéaire à l'axe du cylindre, se caractérise par une bonne conservation au cours du processus d'admission et plus spécifiquement au cours de la remontée du piston. C'est un mouvement macroscopique aérodynamique qui est généralement utilisé pour les moteurs à combustion interne à allumage par compression où il est un bon moyen d'homogénéiser le mélange carburé.

Le tumble est lui aussi un mouvement macroscopique de rotation du mélange carburé mais autour d'un axe globalement perpendiculaire à l'axe du cylindre. Il a la particularité de se transformer en mouvements aérodynamiques microscopiques qui créent de la turbulence lors de la remontée du piston. C'est un mouvement macroscopique aérodynamique qui est généralement utilisé pour les moteurs à combustion interne à allumage commandé où il est un bon moyen d'obtenir une vitesse de combustion appropriée. Par ailleurs, ce mouvement est assez sensible à la géométrie de la chambre de combustion ainsi qu'à la loi de levée, aussi bien en termes d'étalement que hauteur de levée maximale.

L'utilisation du swumble permet de bénéficier des avantages des deux structures aérodynamiques détaillées ci-dessus et donc de bénéficier d'une excellente homogénéisation et d'une meilleure vitesse de combustion grâce à un niveau de turbulence plus élevée lors de la phase de compression que ce qu'on observe avec les meilleurs moteurs à allumage commandé actuels.

### Technique antérieure

Différentes solutions techniques ont été développées pour réaliser ces écoulements turbulents dans le cylindre.

Une première solution est décrite notamment dans le brevet US6606975. Cette solution consiste à piloter un volet placé dans la conduite d'admission pour générer des turbulences. Ce brevet fait apparaître en outre la notion de swumble à faible charge. Une telle solution est complexe et pénalisante pour le remplissage du cylindre.

Une deuxième solution est décrite notamment dans le brevet US5056486. Cette solution propose une définition de conduits d'admission asymétriques permettant de générer une aérodynamique complexe. Toutefois, cette solution nécessite un déphasage des ouvertures des soupapes d'admission, ce qui est pénalisant à forte charge.

Une troisième solution est décrite notamment dans les demandes de brevet DE10128500 et EP1783341. Cette solution permet de générer une aérodynamique complexe à l'aide d'appendices passifs ou actifs dans le conduit d'admission. Dans les deux cas, ces appendices limitent le remplissage du cylindre en gaz. De plus, les appendices actifs nécessitent une commande rendant la solution complexe.

Une quatrième solution est décrite notamment dans les demandes de brevet US 2008/0149063, JP 2010-261314 et US 2012160198. Cette solution consiste à générer des mouvements aérodynamiques du gaz dans le cylindre au moyen de masques placés à l'extrémité du conduit d'admission. Toutefois, pour obtenir un mouvement aérodynamique du gaz de type swumble, il semble nécessaire d'utiliser deux masques par conduit d'admission ou d'utiliser des lois de levées de soupape spécifique, ce qui rend cette solution complexe. De plus, les masques utilisés limitent le remplissage du cylindre en gaz.

La demande de brevet FR 2924165 A1 décrit un moteur à combustion interne équipé d'un conduit d'admission.

### Résumé de l'invention

Le but de l'invention est de pallier ces inconvénients, au moyen d'un dispositif d'admission permettant d'obtenir, de manière simple, de bonnes performances du moteur, notamment avec une énergie turbulente importante et une structure aérodynamique du gaz de type swumble stable. Pour cela, la présente invention concerne un dispositif d'admission de gaz pour un cylindre d'un moteur à combustion interne. Le dispositif d'admission de gaz comporte un conduit d'admission, une soupape d'admission, une calibration de la soupape d'admission, des moyens pour former un mouvement aérodynamique du gaz du type tumble dans le cylindre, et un masque. En outre, l'intersection entre le conduit d'admission et la calibration se fait selon une droite non parallèle au plan de la face feu. Cette inclinaison permet de générer un mouvement aérodynamique du type swirl dans le cylindre, qui se combine au tumble pour former un mouvement aérodynamique du type swumble. De plus, le masque est orienté de la même manière que l'extrémité du conduit d'admission, favorisant le mouvement aérodynamique du gaz dans le cylindre.

L'invention concerne un dispositif d'admission de gaz pour un cylindre d'un moteur à combustion interne, ledit dispositif d'admission de gaz comprenant un conduit d'admission, au moins une soupape d'admission disposée au sein dudit conduit d'admission, au moins une calibration de ladite soupape d'admission disposée à une extrémité dudit conduit d'admission et dirigée vers la face feu dudit cylindre, des moyens de déviation dudit gaz pour générer un mouvement aérodynamique dudit gaz au sein dudit cylindre autour d'un axe sensiblement perpendiculaire à l'axe dudit cylindre, au moins un masque obstruant partiellement ladite extrémité dudit conduit d'admission débouchant dans ledit cylindre, dans lequel, à l'intrados dudit conduit d'admission, l'intersection entre ledit conduit d'admission et ladite calibration forme un segment de droite porté par une génératrice rectiligne formant un angle α compris entre 5 et 45° par rapport à un plan parallèle à ladite face feu dudit cylindre passant par un point d'intersection entre ledit conduit d'admission et ladite calibration. Un plan médian dudit masque forme un angle γ autour de l'axe de ladite soupape par rapport au plan médian dudit conduit d'admission, de telle sorte que γ= α +/- 5°.

Selon un mode de réalisation, l'angle γ est défini par γ= α +/- 2°, de préférence l'angle γ vaut sensiblement l'angle α.

Conformément à une mise en oeuvre, ledit angle α est compris entre 5 et 20°, de préférence entre 8 et 15°.

Selon un aspect, lesdits moyens pour générer un mouvement aérodynamique du gaz au sein dudit cylindre autour d'un axe sensiblement perpendiculaire à l'axe dudit cylindre sont constitués par la forme dudit conduit d'admission, notamment au moyen d'une forme de tremplin, et/ou d'une convergence de la section de passage dudit conduit d'admission, et/ou une inclinaison dudit conduit d'admission.

Selon une caractéristique, ledit conduit d'admission comporte deux sorties de gaz vers ledit cylindre et deux soupapes d'admission.

Conformément à une option, ledit masque a sensiblement une forme d'une portion d'un anneau dont le centre est disposé sur l'axe de ladite soupape d'admission.

Avantageusement, ladite portion d'anneau s'étend sur une plage annulaire δ comprise entre 150 et 200°, de préférence entre 160 et 180°, et préférentiellement sensiblement 170 °.

De manière avantageuse, la hauteur dudit masque est comprise entre 2 et 4 mm, de préférence entre 2.8 et 3.2 mm, et vaut préférentiellement sensiblement 3 mm.

De préférence, le rayon de raccordement dudit masque avec ledit cylindre est compris entre 1 et 3 mm, et vaut de préférence sensiblement 2 mm.

En outre, l'invention concerne un moteur à combustion interne comportant au moins un cylindre pourvu au moins d'un dispositif d'admission selon l'une des caractéristiques précédentes, d'au moins un dispositif d'échappement, et de moyens d'injection de carburant.

D'autres caractéristiques et avantages du dispositif selon l'invention, apparaîtront à la lecture de la description ci-après d'exemples non limitatifs de réalisations, en se référant aux figures annexées et décrites ci-après.

### Liste des figures

La figure 1 illustre un dispositif d'admission selon un mode de réalisation de l'invention dans sa position en mode de fonctionnement.
La figure 2 illustre un masque d'un dispositif d'admission selon un mode de réalisation de l'invention dans sa position en mode de fonctionnement.
La figure 3 illustre l'orientation d'un masque d'un dispositif d'admission selon l'art antérieur selon un plan perpendiculaire à l'axe de la soupape.
La figure 4 illustre l'orientation d'un masque d'un dispositif d'admission selon un mode de réalisation de l'invention selon un plan perpendiculaire à l'axe de la soupape.
La figure 5 illustre des vues de l'intrados d'un dispositif d'admission de gaz respectivement selon l'art antérieur et selon un mode de réalisation de l'invention dans sa positionnement en mode de fonctionnement.
La figure 6 illustre le mouvement aérodynamique du gaz à la sortie de la soupape d'admission pour un dispositif d'admission équipé d'un masque selon l'art antérieur, pour un angle vilebrequin de 460°.
La figure 7 illustre le mouvement aérodynamique du gaz à la sortie de la soupape d'admission pour un dispositif d'admission équipé d'un masque selon un mode de réalisation de l'invention, pour un angle de vilebrequin de 460 °.
La figure 8 illustre deux courbes de l'énergie cinétique turbulente en fonction du CAD (degrés de l'angle vilebrequin), l'une pour un conduit d'admission selon l'invention, et l'autre pour un conduit d'admission selon l'art antérieur.
La figure 9 illustre le mouvement aérodynamique du gaz dans le cylindre pour un dispositif d'admission équipé d'un masque selon l'art antérieur, pour un angle vilebrequin de 590 °.
La figure 10 illustre le mouvement aérodynamique du gaz dans le cylindre pour un dispositif d'admission équipé d'un masque selon un mode de réalisation de l'invention, pour un angle vilebrequin de 590 °.

### Description des modes de réalisation

La présente invention concerne un dispositif d'admission de gaz pour un cylindre d'un moteur à combustion interne.

Le dispositif d'admission de gaz comporte :
- un conduit d'admission de gaz pour l'admission d'un gaz dans un cylindre,
- une soupape d'admission insérée dans le conduit d'admission, l'ouverture de la soupape permettant l'entrée du gaz dans le cylindre,
- une pièce de calibration de la soupape d'admission disposée à l'extrémité de la soupape d'admission vers le cylindre, la calibration étant dirigée vers la face feu du cylindre, la calibration de la soupape d'admission est une pièce mécanique sensiblement cylindrique dans laquelle se déplace la soupape,
- des moyens de déviation du gaz pour générer un mouvement aérodynamique du gaz au sein du cylindre selon une direction perpendiculaire à l'axe du cylindre, en d'autres termes des moyens pour former un mouvement aérodynamique du gaz de type tumble,
- un masque d'admission obturant partiellement l'extrémité du conduit d'admission qui débouche dans le cylindre. Se définit comme masque d'admission, un usinage spécifique dans la chambre de combustion à proximité de l'emplacement des sièges de soupapes admission, qui permet de bloquer le passage sur une partie de la section de passage du conduit d'admission au niveau du siège afin d'accélérer les gaz et donc augmenter la turbulence dans la chambre de combustion.

On appelle face feu ou face combustion, le plan inférieur de la culasse (du moteur à combustion interne) orthogonal à l'axe du cylindre. La calibration de la soupape est insérée dans le plan inférieur de la culasse de manière à alimenter le cylindre en gaz.

Selon l'invention, le dispositif d'admission est formé de telle sorte que, à l'intrados dudit conduit d'admission, l'intersection entre le conduit d'admission et la calibration de la soupape, forme un segment de droite portée par une génératrice rectiligne formant un angle α compris entre 5 et 45°, par rapport à un plan parallèle à la face feu et passant par un point d'intersection entre le conduit d'admission et la calibration de la soupape. On appelle intrados du conduit d'admission, la face inférieure du conduit d'admission (quand le conduit d'admission est dans sa position de fonctionnement). Ainsi, l'intersection (qui est un segment de droite) de la face inférieure du conduit d'admission avec la calibration de soupape est inclinée par rapport à un plan parallèle à la face feu. Cette inclinaison permet une déviation du gaz à l'entrée de la calibration, et a fortiori à l'entrée du cylindre. Cette déviation de gaz forme un mouvement aérodynamique du gaz dans le cylindre selon une direction parallèle à l'axe du cylindre, en d'autres termes un mouvement aérodynamique du gaz de type swirl. Cette inclinaison peut se traduire par une rotation du conduit d'admission au niveau de son extrémité (l'extrémité du conduit d'admission est alors vrillée), ce qui favorise le mouvement aérodynamique du gaz de type swirl. De plus, cette réalisation permet de réaliser un mouvement aérodynamique du gaz de type swirl sans aucun appendice particulier de type masque, volet ou lame. De plus, l'architecture de ces dispositifs d'admission ne présente aucune contrainte supplémentaire pour une implantation dans une culasse de moteur à combustion interne monocylindre ou multicylindre.

L'inclinaison selon un angle α compris entre 5 et 45° permet la génération d'un mouvement aérodynamique du gaz de type swirl. En dessous de 5°, l'inclinaison est insuffisante pour avoir une influence significative sur le mouvement aérodynamique du gaz dans le cylindre. Au-delà de 45°, la géométrie du conduit d'admission est complexe et difficile à réaliser.

Par combinaison des mouvements aérodynamiques du gaz de type tumble et de type swirl, le dispositif d'admission du gaz selon l'invention permet un mouvement aérodynamique du gaz de type swumble dans le cylindre, ce qui permet de bénéficier d'une excellente homogénéisation et d'une meilleure vitesse de combustion grâce à un niveau de turbulence plus élevé lors de la phase de compression que ce qu'on observe avec les meilleurs moteurs à allumage commandé actuels.

Selon un aspect de l'invention, la section de passage du conduit d'admission peut avoir une forme sensiblement rectangulaire, avec les coins arrondis. Dans ce cas, l'intersection du conduit d'admission et la calibration de la soupape est formée par quatre arêtes : une du côté de l'intrados, une sur l'extrados, et deux latérales.

Selon un exemple de ce mode de réalisation, la section de passage rectangulaire du conduit d'admission au niveau de l'intersection avec la calibration de soupape est inclinée par rapport à la direction de la face feu. En d'autres termes, aucune des arrêtes de la section de passage rectangulaire n'est parallèle ou perpendiculaire à un plan parallèle à la face feu.

Selon l'invention, un plan médian du masque forme un angle γ non nul autour de l'axe de la soupape par rapport au plan médian du conduit d'admission, de telle sorte que l'angle γ peut être défini par la relation : γ=α +/- 5°. Dans la présente demande X +/- Y (avec X et Y des nombres positifs), signifie un intervalle centré sur la valeur X, l'intervalle étant compris entre les valeurs X-Y et X+Y (valeurs extrêmes incluses). Ainsi, le masque est orienté de manière similaire à l'extrémité du conduit d'admission, favorisant ainsi le mouvement aérodynamique du gaz dans le cylindre. De cette manière, on obtient des gains en énergie cinétique turbulente à proximité du point mort haut, et on augmente la stabilité de la structure du mouvement aérodynamique du gaz dans le cylindre par rapport à un dispositif d'admission sans masque et pourvu de moyens pour générer un mouvement aérodynamique du gaz du type swumble. De plus, cette disposition ne présente aucune contrainte supplémentaire pour une implantation d'une culasse du moteur, ce qui permet d'obtenir de manière simple un mouvement aérodynamique du gaz dans le cylindre. On appelle plan médian du masque, un plan qui coupe le masque en deux parties identiques et qui comporte l'axe de la soupape d'admission. Le plan médian du masque peut être son plan de symétrie. On appelle plan médian du conduit d'admission, un plan qui coupe le conduit d'admission en deux parties sensiblement identiques et qui comporte l'axe de la soupape d'admission.

Conformément à une mise en oeuvre de l'invention, l'angle γ peut être défini par γ=α +/-2°. De préférence, l'angle γ peut valoir sensiblement l'angle α. Ces valeurs préférées permettent d'optimiser les gains en énergie cinétique turbulente et en stabilité du mouvement aérodynamique du gaz, grâce à une plus grande similarité entre l'orientation du masque et l'orientation de l'extrémité du conduit d'admission.

Le gaz est un comburant ou un mélange carburé (cas de l'injection indirecte), et peut comprendre notamment de l'air à pression ambiante, de l'air suralimenté, un mélange d'air (suralimenté ou non) et de gaz brûlés.

Selon un mode de réalisation de l'invention, l'angle α peut être compris entre 5 et 20°, et de manière préférée entre 8 et 15°. Ces plages angulaires permettent d'optimiser le mouvement aérodynamique du gaz de type swirl, et ainsi d'optimiser les mouvements aérodynamiques du gaz combinées de type swumble.

Conformément à une mise en oeuvre de l'invention, les moyens de déviation du gaz sont constitués uniquement par la forme du conduit d'admission. Ainsi, aucun élément actif ou passif ne vient entraver le passage du gaz dans le conduit d'admission.

Selon un premier exemple de réalisation, les moyens de déviation du gaz peuvent comprendre une forme de tremplin sur le profil inférieur du conduit d'admission. Cette forme de tremplin peut être obtenue par une variation de concavité du profil inférieur du conduit d'admission. La forme de tremplin favorise le décollement du flux de gaz dans le conduit d'admission et le dirige vers la partie supérieure du conduit d'admission et donc vers la partie supérieure du cylindre afin de maximiser le mouvement aérodynamique du gaz de type tumble.

Selon un deuxième exemple de réalisation (pouvant être combiné avec le premier exemple de réalisation), les moyens de déviation du gaz peuvent comprendre une convergence de la section de passage à proximité de la calibration de la soupape. En d'autres termes la section de passage du conduit d'admission se réduit vers son extrémité proche de la calibration de la soupape. Cette convergence entraîne une accélération du flux de gaz favorable aux aspects remplissage et mouvement aérodynamique du gaz.

Selon un troisième exemple de réalisation (pouvant être combiné avec le premier et/ou le deuxième exemple de réalisation), les moyens de déviation du gaz peuvent comprendre une inclinaison du conduit d'admission. Cette inclinaison du conduit d'admission peut être définie par un angle de tangente au point d'intersection du conduit d'admission avec la calibration compris entre 0 et 45°. Cette inclinaison peut être couplée à la pente de la partie supérieure de la chambre de combustion du cylindre. L'inclinaison du conduit d'admission permet d'incliner le flux de gaz entrant dans le cylindre pour former un mouvement aérodynamique du gaz de type tumble. Par exemple, une optimisation du mouvement aérodynamique de gaz de type tumble peut être atteinte par une tangence entre l'angle du conduit d'admission et l'angle de la pente de la partie supérieure de la chambre de combustion.

Selon un mode de réalisation de l'invention, le masque peut avoir sensiblement une forme d'une portion d'anneau dont le centre est situé sur l'axe de la soupape d'admission. Cette forme permet un compromis entre remplissage du cylindre et mouvement aérodynamique du gaz dans le cylindre. En masquant une partie de la section de passage du conduit d'admission à faibles levées de soupape d'admission, on initie le mouvement aérodynamique du gaz dans le cylindre sans trop pénaliser le remplissage puisque la levée est faible. Une fois que la levée de la soupape d'admission est plus importante, le masque n'opère plus et on a donc le remplissage maximum avec un mouvement aérodynamique du gaz dans le cylindre déjà initialisé qui peut alors se développer. De manière avantageuse, le diamètre intérieur de l'anneau peut correspondre sensiblement au diamètre de la calibration de la soupape. Avantageusement, la portion d'anneau peut s'étendre sur une plage angulaire comprise entre 150 et 200°, de préférence entre 160 et 180 °, et peut valoir préférentiellement 170°. Ces plages angulaires permettent d'orienter le mouvement aérodynamique du gaz en sortie du conduit d'admission, afin d'optimiser le mouvement aérodynamique du gaz dans le cylindre.

Conformément à une option de réalisation de l'invention, la hauteur du masque peut être compris entre 2 et 4 mm, de préférence entre 2.8 et 3.2 mm, et peut valoir préférentiellement sensiblement 3 mm. Ces plages de valeur permettent un bon compromis pour initier le mouvement aérodynamique du gaz dans le cylindre sans pénaliser le remplissage du cylindre.

De manière avantageuse, le rayon de raccordement du masque avec le toit du cylindre peut être compris entre 1 et 3 mm, et peut valoir sensiblement 2 mm. On évite ainsi les zones isolées dans la chambre de combustion (cylindre). De plus, des formes anguleuses pénaliseraient la combustion au sein du cylindre.

Selon un aspect de l'invention, le dispositif d'admission de gaz peut être de type siamois. En d'autres termes, le conduit d'admission comporte une unique entrée et deux sorties dirigées vers le cylindre, chacune des sorties comportant une soupape d'admission et une calibration de soupape d'admission. Chaque sortie comporte les caractéristiques angulaires définies pour former un mouvement aérodynamique du gaz de type swumble. Ce type de dispositif d'admission, adapté pour les cylindres pourvus de deux soupapes d'admission, permet de simplifier la conception du plénum d'admission (le plénum d'admission est le volume en amont des conduits d'admission). De plus, chaque sortie comporte un masque, orienté selon les caractéristiques définies dans la présente demande.

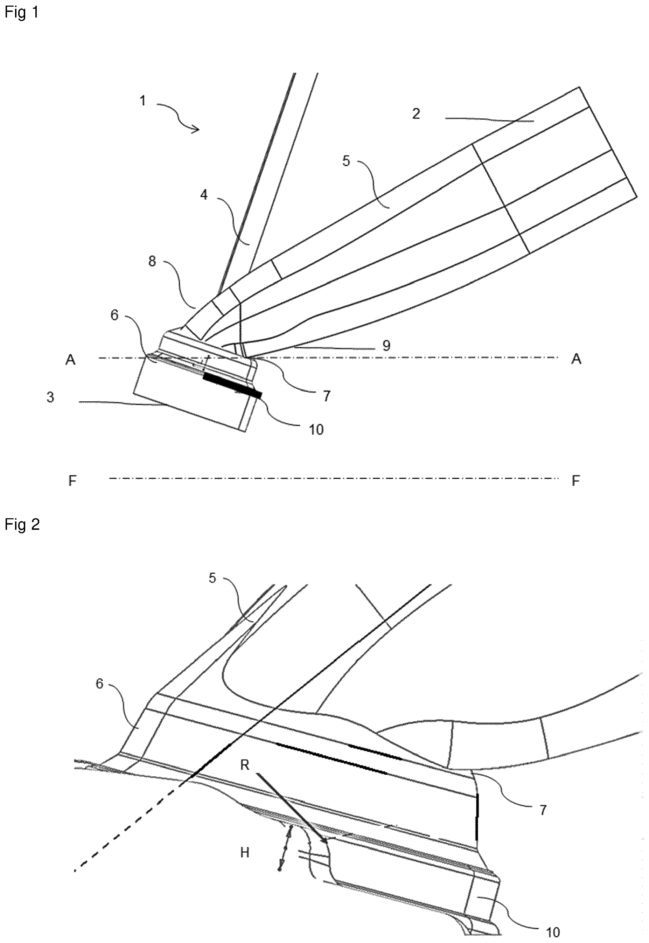

Les figures 1 et 2 illustrent, schématiquement et de manière non limitative, un dispositif d'admission 1 selon un mode de réalisation de l'invention. La figure 1 est une vue de côté en vue de fonctionnement du dispositif d'admission 1, et la figure 2 est un agrandissement de la figure 1 au niveau du masque. Le dispositif d'admission 1 comporte un conduit d'admission 5, une soupape 4 introduite dans le conduit d'admission, et une calibration 6 de la soupape d'admission. L'extrémité de la soupape d'admission 4 assurant le passage du gaz pour son ouverture n'est pas représentée. Le conduit d'admission 5 comporte une entrée de gaz 2 et une sortie de gaz 3, dans laquelle sont disposées la soupape d'admission 4 et sa calibration 6.

Le dispositif d'admission 1 comporte en outre des moyens de déviation du gaz pour générer un mouvement aérodynamique du gaz au sein du cylindre selon une direction perpendiculaire à l'axe du cylindre (mouvement aérodynamique du gaz de type tumble). Ces moyens de déviation du gaz comportent une convergence 8 de la section de passage du conduit d'admission 5 à proximité de la calibration 6 de la soupape. Cette convergence 8 correspond à une réduction de la section de passage à proximité de la calibration 6 de soupape. De plus, les moyens de déviation du gaz comprennent un tremplin 9 formé sur le profil inférieur du conduit d'admission 5 par une variation de concavité du profil inférieur du conduit d'admission 5. En outre, les moyens de déviation du gaz comprennent l'inclinaison du conduit d'admission 5 définie par la tangente au point d'intersection 7 du conduit d'admission 5 avec la calibration 6, et une direction AA. Sur cette figure est représentée une droite FF appartenant au plan de la face feu,la direction AA est parallèle à la droite FF.

En outre, le dispositif d'admission 1 comprend un masque 10. Le masque 10 est placé dans la calibration 6 de soupape pour obstruer partiellement la sortie 3 du conduit d'admission 5. Le masque 10 est défini par une hauteur H, et par un rayon de courbure R par rapport au toit de la chambre du cylindre. Pour le mode de réalisation illustré, la hauteur H peut valoir 3 mm et le rayon de raccordement R peut valoir 2 mm.

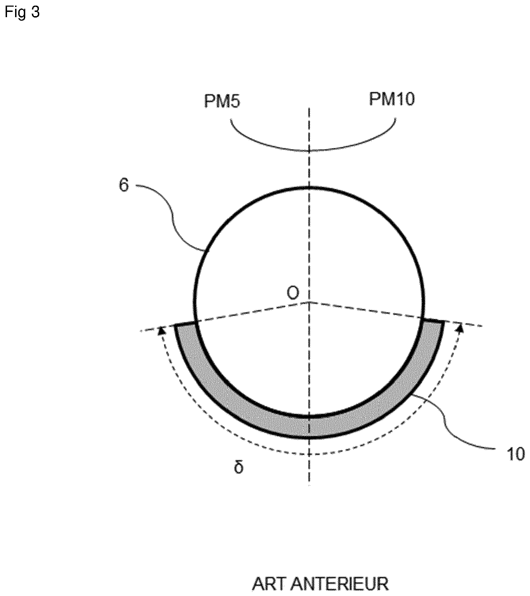

La figure 3 illustre, schématiquement, l'orientation d'un masque d'un dispositif d'admission selon l'art antérieur selon un plan perpendiculaire à l'axe de la soupape. Le masque 10 a une forme d'une portion d'anneau. Le masque 10 est disposé dans la calibration 6 (dont seule une paroi est représentée). Le diamètre extérieur du masque 10 correspond au diamètre de la calibration 6. La portion d'anneau du masque 10 a un centre O (le centre O est situé sur l'axe de la soupape), et s'étend sur une plage angulaire δ, pouvant valoir sensiblement 170°. De plus, le masque 10 a un plan médian PM10 (représenté par une droite). Le plan médian PM10 du masque 10 est le plan de symétrie du masque qui comporte l'axe de la soupape. Sur cette figure est représenté également le plan médian du conduit d'admission PM5 (représenté par une droite). Pour le mode de réalisation de l'art antérieur, les plans médians PM5 et PM10 sont confondus.

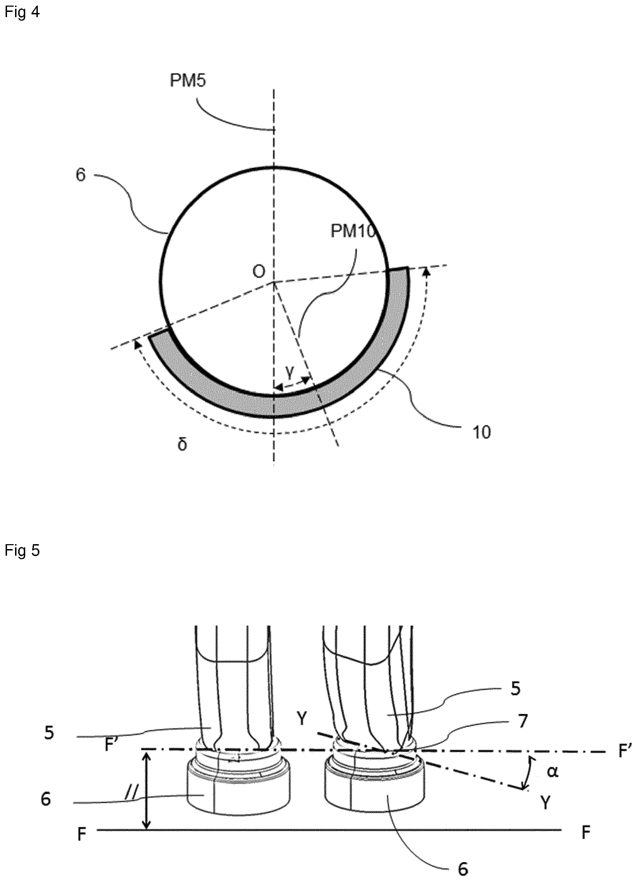

La figure 4 illustre, schématiquement et de manière non limitative, l'orientation d'un masque d'un dispositif d'admission selon un mode de réalisation de l'invention selon un plan perpendiculaire à l'axe de la soupape. Le masque 10 a une forme d'une portion d'anneau. Le masque 10 est disposé dans la calibration 6 (dont seule une paroi est représentée). Le diamètre extérieur du masque 10 correspond au diamètre de la calibration 6. La portion d'anneau du masque 10 a un centre O (le centre O est situé sur l'axe de la soupape), et s'étend sur une plage angulaire δ, pouvant valoir sensiblement 170°. De plus, le masque 10 a un plan médian PM10 (représenté par une droite). Le plan médian PM10 du masque 10 est le plan de symétrie du masque qui comporte l'axe de la soupape. Sur cette figure est représenté également le plan médian du conduit d'admission PM5 (représenté par une droite). Selon l'invention, les plans médians PM5 et PM10 ne sont pas confondus : le plan médian PM10 est obtenu par rotation du plan médian PM5 autour de l'axe de la soupape d'un angle γ.

La figure 5 illustre, schématiquement et de manière non limitative, des vues partielles de l'intrados (face inférieure) de conduits d'admissions. La figure 5 est dans un plan perpendiculaire à la face feu (en position de fonctionnement du dispositif d'admission). La figure de gauche correspond à un conduit selon l'art antérieur sans moyens de déviation du gaz pour former un mouvement aérodynamique du gaz de type swirl. La figure de droite correspond à un dispositif selon une variante de l'invention avec, au niveau de l'intrados, une inclinaison de l'intersection entre le conduit d'admission et la calibration de soupape pour former un mouvement aérodynamique du gaz de type swirl. Pour le mode de réalisation illustré, la section du conduit (conduit d'admission) est sensiblement rectangulaire.

Sur ces figures, la droite FF appartient au plan de la face feu (définie par le cylindre non représenté), et la direction F'F' est une droite appartenant à un plan parallèle à la face feu FF passant par un point d'intersection entre le conduit d'admission 5 et la calibration 6 de la soupape d'admission.

Selon l'art antérieur illustré sur la figure de gauche, l'intersection 7 entre le conduit d'admission 5 et la calibration 6 de la soupape d'admission est un segment de droite confondu avec la droite F'F'.

Au contraire, selon l'invention illustrée sur la figure de droite, l'intersection 7 entre le conduit d'admission 5 et la calibration 6 de la soupape d'admission forme un segment de droite porté par une génératrice rectiligne d'axe YY inclinée d'un angle α par rapport au plan F'F'. Cet angle α est compris entre 5 et 45°. On peut observer sur la figure de droite que cette inclinaison entraîne, à proximité du raccord, une légère rotation du conduit d'admission 2, qui a une section de passage sensiblement rectangulaire. Selon l'invention, l'angle α est lié à l'angle γ illustré en figure 4, par la formule : γ= α +/- 5°.

L'invention concerne également un ensemble comprenant un cylindre d'un moteur à combustion interne et dispositif d'admission selon l'une des variantes ou des combinaisons de variantes décrites précédemment.

De plus, la présente invention concerne un moteur à combustion interne comportant au moins un cylindre, chaque cylindre étant pourvu :
- d'au moins un dispositif d'admission selon l'une des variantes ou combinaison de variantes décrites précédemment, pour l'admission d'un gaz dans le cylindre,
- d'au moins un dispositif d'échappement, pour évacuer les gaz brûlés du cylindre, le dispositif d'échappement est avantageusement équipé d'une soupape d'échappement,
- d'un piston ayant un mouvement de translation rectiligne alternatif dans le cylindre pour générer une énergie mécanique à partir de la combustion (par rotation d'un vilebrequin),
- de moyens d'injection de carburant, pour générer une combustion.

Selon un mode de réalisation, les moyens d'injection de carburant peuvent être des moyens d'injection directe, c'est-à-dire que les moyens d'injection de carburant sont disposés directement dans le cylindre.

Alternativement, les moyens d'injection de carburant peuvent être des moyens d'injection indirecte, c'est-à-dire que les moyens d'injection de carburant sont disposés dans le dispositif d'admission.

Selon une mise en oeuvre de l'invention, le moteur à combustion interne est un moteur à allumage commandé. Dans ce cas, le moteur comporte en outre au moins une bougie pour générer la combustion du mélange gaz et carburant.

Alternativement, le moteur à combustion interne est un moteur à allumage par compression. Dans ce cas, le moteur ne comporte aucune bougie pour générer la combustion du mélange gaz et carburant.

Le moteur à combustion interne peut comporter une pluralité de cylindres, notamment 3, 4, 5 ou 6 cylindres.

De préférence, le moteur à combustion peut être un moteur à quatre soupapes par cylindre (deux soupapes d'admission et deux soupapes d'échappement).

Selon un aspect de l'invention, lorsque les cylindres comportent deux conduits d'admission, ces deux conduits peuvent être identiques et parallèles par rapport au plan médian de la chambre de combustion.

En variante, les cylindres peuvent être alimentés en gaz par un dispositif d'admission siamois.

En outre, la présente invention concerne l'utilisation d'un moteur à combustion interne selon l'une des variantes ou combinaison de variantes décrites précédemment selon un cycle de Miller ou un cycle d'Atkinson.

Le cycle de Miller est un cycle thermodynamique se caractérisant par une fermeture de la ou des soupapes d'admission avant le point mort bas du piston lors de la phase admission. Cela permet d'avoir un travail récupéré plus important en plus d'un refroidissement de la charge admise. Le dispositif d'admission selon l'invention est particulièrement adapté pour une utilisation en cycle dit Miller sur une plage étendue de fonctionnement grâce à la génération d'un mouvement aérodynamique du gaz de type swumble.

Le cycle d'Atkinson est le cycle thermodynamique standard utilisé dans les moteurs à combustion variable.

Le moteur à combustion interne selon l'invention peut être utilisé dans le domaine des applications embarquées, tels que les domaines routier, maritime ou aéronautique, ou dans le domaine des installations stationnaires, comme un groupe électrogène.

Comme il va de soi, l'invention ne se limite pas aux seules formes de réalisation du dispositif d'admission, décrits ci-dessus à titre d'exemple, elle embrasse au contraire toutes les variantes de réalisation.

### Exemples

Les caractéristiques et avantages du procédé selon l'invention apparaîtront plus clairement à la lecture de l'exemple comparatif ci-après.

Pour cet exemple comparatif, on compare deux dispositifs d'admission avec des moyens identiques pour générer un mouvement aérodynamique de type swumble et avec des masques ayant une forme d'une portion d'anneau s'étendant sur une portion angulaire de 170°. Pour le premier dispositif d'admission comparé, le masque est orienté conformément à l'art antérieur (figure 3). Pour le deuxième dispositif d'admission comparé, le masque est orient conformément à un mode de réalisation de l'invention (figure 4) avec α=15° et γ=15°.

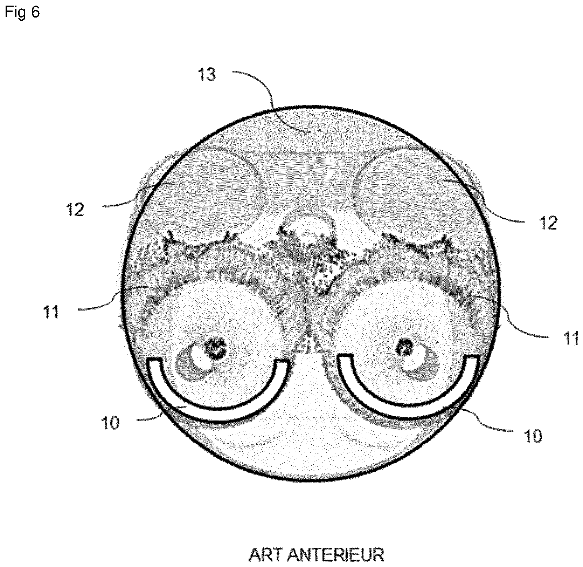

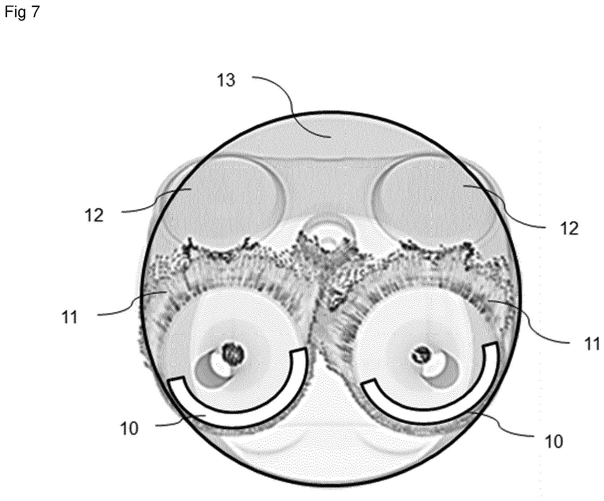

Les figures 6 et 7 sont des vues de dessus (en position de fonctionnement) d'un cylindre 13, équipé de deux conduits d'admission pourvus chacun d'un masque 10, et de deux conduits d'échappement 12. Les figures 6 et 7 illustrent le mouvement aérodynamique du gaz 11 pour un angle vilebrequin de 460°, correspondant au début de la phase d'admission. La figure 6 correspond à la réalisation selon l'art antérieur, et la figure 7 correspond à la réalisation selon un mode de réalisation de l'invention. On remarque sur ces figures une orientation différente du mouvement aérodynamique du gaz : l'invention permet une meilleur orientation du flux pour générer un mouvement aérodynamique du gaz dans le cylindre de type swumble.

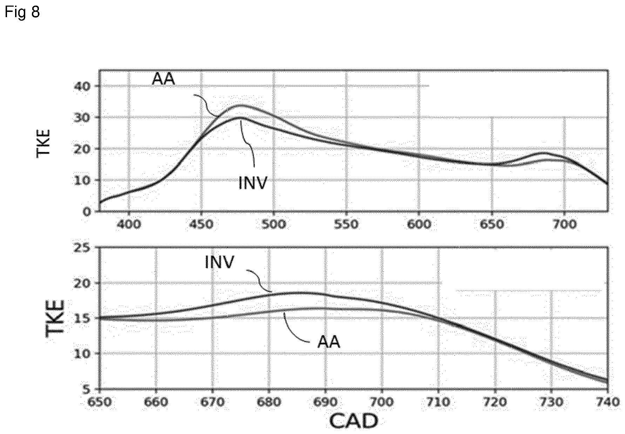

La figure 8 représente l'énergie cinétique turbulente TKE pour chaque type d'admission, en fonction du CAD (degrés de l'angle vilebrequin). La courbe relative à l'orientation du masque selon l'art antérieur est notée AA, et la courbe relative à l'orientation du masque selon un mode de réalisation de l'invention est notée INV. La figure du bas est un zoom de la figure du haut pour une plage de CAD comprise entre 650 et 740. On remarque que des gains en énergie cinétique turbulente proche du point mort haut sont obtenus avec l'orientation du masque selon l'invention. Ce gain est de l'ordre de 10% à proximité du point mort haut.

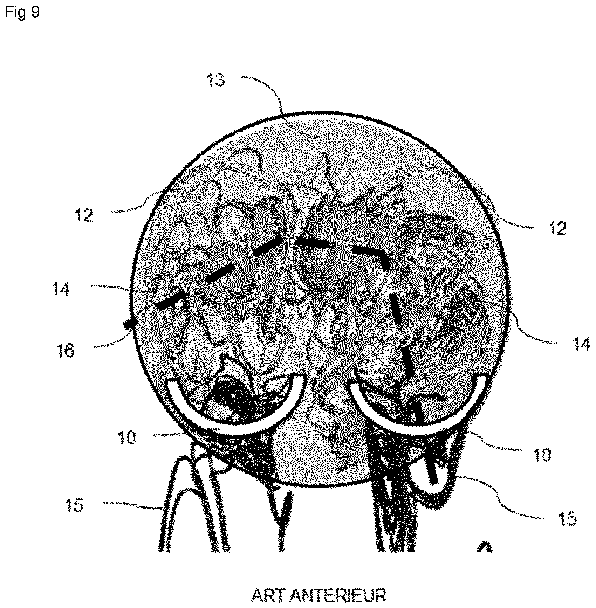

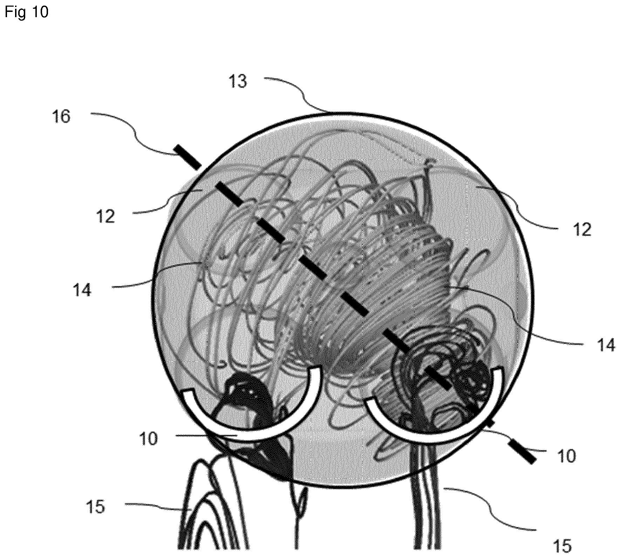

Les figures 9 et 10 sont des vues de dessus (en position de fonctionnement) d'un cylindre 13, équipé de deux conduits d'admission pourvu chacun d'un masque 10, et de deux conduits d'échappement 12. Les figures 9 et 10 illustrent le mouvement aérodynamique du gaz 14 dans le cylindre 13 pour un angle de vilebrequin de 590 ° (en cours de la phase de compression, le piston étant en approche du point mort haut avant l'allumage, ainsi que le mouvement aérodynamique du gaz 15 dans les conduits d'admission (non représentés). La figure 9 correspond à la réalisation selon l'art antérieur, et la figure 10 correspond à la réalisation selon un mode de réalisation de l'invention. On remarque sur la figure 9, que le mouvement aérodynamique du gaz 14 de type swumble dans le cylindre est réalisé autour d'un axe 16, qui est une ligne brisée formée de trois segments de droite. Au contraire, on remarque sur la figure 10, que le mouvement aérodynamique du gaz 14 de type swumble dans le cylindre est réalisé autour d'un axe 16, qui est formée d'une unique droite. Ainsi, l'orientation du masque selon l'invention permet la stabilité de la structure du mouvement aérodynamique du gaz dans le cylindre de type swumble.

## Revendications

1. Dispositif d'admission de gaz pour un cylindre d'un moteur à combustion interne, ledit dispositif d'admission de gaz (1) comprenant un conduit d'admission (5), au moins une soupape d'admission (4) disposée au sein dudit conduit d'admission (5), au moins une calibration (6) de ladite soupape d'admission (4) disposée à une extrémité (3) dudit conduit d'admission (5) et dirigée vers la face feu (FF) dudit cylindre, des moyens de déviation dudit gaz pour générer un mouvement aérodynamique dudit gaz au sein dudit cylindre autour d'un axe sensiblement perpendiculaire à l'axe dudit cylindre, au moins un masque (10) obstruant partiellement ladite extrémité (3) dudit conduit d'admission (5) débouchant dans ledit cylindre, dans lequel, à l'intrados dudit conduit d'admission, l'intersection (7) entre ledit conduit d'admission (5) et ladite calibration (6) forme un segment de droite porté par une génératrice (YY) rectiligne formant un angle α compris entre 5 et 45° par rapport à un plan parallèle à ladite face feu (FF) dudit cylindre passant par un point d'intersection entre ledit conduit d'admission (5) et ladite calibration (6), un plan médian (PM10) dudit masque (10) formant un angle γ autour de l'axe de ladite soupape d'admission (4) par rapport au plan médian (PM5) dudit conduit d'admission (5), de telle sorte que γ= α +/- 5°.

2. Dispositif d'admission selon la revendication 1, dans lequel l'angle γ est défini par γ= α +/- 2°, de préférence l'angle γ vaut sensiblement l'angle α.

3. Dispositif d'admission selon l'une des revendications précédentes, dans lequel ledit angle α est compris entre 5 et 20°, de préférence entre 8 et 15°.

4. Dispositif d'admission selon l'une des revendications précédentes, dans lequel lesdits moyens pour générer un mouvement aérodynamique du gaz au sein dudit cylindre autour d'un axe sensiblement perpendiculaire à l'axe dudit cylindre sont constitués par la forme dudit conduit d'admission, notamment au moyen d'une forme de tremplin (9), et/ou d'une convergence (8) de la section de passage du conduit d'admission (5), et/ou une inclinaison dudit conduit d'admission (5).

5. Dispositif d'admission selon l'une des revendications précédentes, dans lequel ledit conduit d'admission (5) comporte deux sorties de gaz vers ledit cylindre et deux soupapes d'admission.

6. Dispositif d'admission selon l'une des revendications précédentes, dans lequel ledit masque (10) a sensiblement une forme d'une portion d'un anneau dont le centre (O) est disposé sur l'axe de ladite soupape d'admission (4).

7. Dispositif d'admission selon la revendication 6, dans lequel ladite portion d'anneau s'étend sur une plage annulaire δ comprise entre 150 et 200°, de préférence entre 160 et 180°, et préférentiellement sensiblement 170 °.

8. Dispositif d'admission selon l'une des revendications précédentes, dans lequel la hauteur dudit masque (10) est comprise entre 2 et 4 mm, de préférence entre 2.8 et 3.2 mm, et vaut préférentiellement sensiblement 3 mm.

9. Dispositif d'admission selon l'une des revendications précédentes, dans lequel le rayon de raccordement dudit masque (10) avec ledit cylindre est compris entre 1 et 3 mm, et vaut de préférence sensiblement 2 mm.

10. Moteur à combustion interne comportant au moins un cylindre pourvu au moins d'un dispositif d'admission (1) selon l'une des revendications précédentes, d'au moins un dispositif d'échappement, et de moyens d'injection de carburant.

## Patentansprüche

1. Gaseinlassvorrichtung für einen Zylinder einer Brennkraftmaschine, wobei die Gaseinlassvorrichtung (1) einen Einlasskanal (5), mindestens ein Einlassventil (4), das im Inneren des Einlasskanals (5) angeordnet ist, mindestens eine Kalibrierung (6) des Einlassventils (4), die an einem Ende (3) des Einlasskanals (5) angeordnet ist und der Feuerseite (FF) des Zylinders zugewandt ist, Mittel zur Ablenkung des Gases, um eine aerodynamische Bewegung des Gases innerhalb des Zylinders um eine zur Achse des Zylinders im Wesentlichen senkrechte Achse zu erzeugen, und mindestens eine Maske (10), die das in den Zylinder mündende Ende (3) des Einlasskanals (5) teilweise verschließt, umfasst, wobei an der inneren Wölbfläche des Einlasskanals die Schnittlinie (7) zwischen dem Einlasskanal (5) und der Kalibrierung (6) einen Geradenabschnitt bildet, der von einer geraden Erzeugenden (YY) getragen wird, die einen Winkel α zwischen 5 und 45° bezüglich einer zu der Feuerseite (FF) des Zylinders parallelen Ebene bildet, die durch einen Schnittpunkt zwischen dem Einlasskanal (5) und der Kalibrierung (6) verläuft, wobei eine Mittelebene (PM10) der Maske (10) einen Winkel γ um die Achse des Einlassventils (4) bezüglich der Mittelebene (PM5) des Einlasskanals (5) bildet, derart, dass γ= α +/- 5° ist.

2. Einlassvorrichtung nach Anspruch 1, wobei der Winkel γ durch γ= α +/- 2° definiert ist und vorzugsweise der Winkel γ im Wesentlichen gleich dem Winkel α ist.

3. Einlassvorrichtung nach einem der vorhergehenden Ansprüche, wobei der Winkel α zwischen 5 und 20°, vorzugsweise zwischen 8 und 15° liegt.

4. Einlassvorrichtung nach einem der vorhergehenden Ansprüche, wobei die Mittel zum Erzeugen einer aerodynamischen Bewegung des Gases innerhalb des Zylinders um eine zur Achse des Zylinders im Wesentlichen senkrechte Achse durch die Form des Einlasskanals gebildet werden, insbesondere mittels einer Sprungschanzenform (9), und/oder durch eine allmähliche Verengung (8) des Durchlassquerschnitts des Einlasskanals (5) und/oder eine Neigung des Einlasskanals (5) .

5. Einlassvorrichtung nach einem der vorhergehenden Ansprüche, wobei der Einlasskanal (5) zwei Gasauslässe zum Zylinder hin und zwei Einlassventile aufweist.

6. Einlassvorrichtung nach einem der vorhergehenden Ansprüche, wobei die Maske (10) im Wesentlichen die Form eines Abschnitts eines Ringes hat, dessen Mittelpunkt (O) auf der Achse des Einlassventils (4) angeordnet ist.

7. Einlassvorrichtung nach Anspruch 6, wobei sich der Ringabschnitt über einen ringförmigen Bereich δ zwischen 150 und 200°, bevorzugt zwischen 160 und 180° und vorzugsweise von im Wesentlichen 170° erstreckt.

8. Einlassvorrichtung nach einem der vorhergehenden Ansprüche, wobei die Höhe der Maske (10) zwischen 2 und 4 mm liegt, bevorzugt zwischen 2,8 und 3,2 mm, und vorzugsweise im Wesentlichen 3 mm beträgt.

9. Einlassvorrichtung nach einem der vorhergehenden Ansprüche, wobei der Anschlussradius der Maske (10) mit dem Zylinder zwischen 1 und 3 mm liegt und vorzugsweise im Wesentlichen 2 mm beträgt.

10. Brennkraftmaschine, welche mindestens einen Zylinder aufweist, der mindestens mit einer Einlassvorrichtung (1) nach einem der vorhergehenden Ansprüche, mindestens einer Abgasvorrichtung und Kraftstoffeinspritzmitteln versehen ist.

## Claims

1. Gas inlet device for a cylinder of an internal combustion engine, said gas inlet device (1) comprising an inlet port (5), at least one inlet valve (4) positioned within said inlet port (5), at least one calibration (6) of said inlet valve (4) positioned at one end (3) of said inlet port (5) and facing towards the firing face (FF) of said cylinder, means for deflecting said gas to generate an aerodynamic movement of said gas within said cylinder about an axis substantially perpendicular to the axis of said cylinder, at least one mask (10) partially obstructing said end (3) of said inlet port (5) opening into said cylinder, wherein, on the intrados of said inlet port, the intersection (7) between said inlet port (5) and said calibration (6) forms a straight-line segment supported by a rectilinear generatrix (YY) forming an angle α of between 5 and 45° with respect to a plane parallel to said firing face (FF) of said cylinder and passing through a point of intersection between said inlet port (5) and said calibration (6), a midplane (PM10) of said mask (10) forming an angle γ about the axis of said inlet valve (4) with respect to the midplane (PM5) of said inlet port (5), such that γ = α +/- 5°.

2. Inlet device according to Claim 1, wherein the angle γ is defined by γ = α +/- 2°, and preferably the angle γ is substantially equal to the angle α.

3. Inlet device according to one of the preceding claims, wherein said angle α is between 5 and 20°, preferably between 8 and 15°.

4. Inlet device according to one of the preceding claims, wherein said means for generating an aerodynamic movement of the gas within said cylinder about an axis substantially perpendicular to the axis of said cylinder consist of the shape of said inlet port, notably by means of a springboard shape (9) and/or of a convergence (8) of the bore-section of the inlet port (5), and/or an inclination of said inlet port (5).

5. Inlet device according to one of the preceding claims, wherein said inlet port (5) comprises two gas outlets leading to said cylinder and two inlet valves.

6. Inlet device according to one of the preceding claims, wherein said mask (10) has substantially the shape of a portion of an annulus the centre (O) of which is positioned on the axis of said inlet valve (4).

7. Inlet device according to Claim 6, wherein said annulus portion extends over an annular range δ of between 150 and 200°, preferably of between 160 and 180°, and preferentially of substantially 170°.

8. Inlet device according to one of the preceding claims, wherein the height of said mask (10) is between 2 and 4 mm, preferably between 2.8 and 3.2 mm, and is preferentially substantially equal to 3 mm.

9. Inlet device according to one of the preceding claims, wherein the fillet radius connecting said mask (10) to said cylinder is between 1 and 3 mm, and is preferentially substantially equal to 2 mm.

10. Internal combustion engine comprising at least one cylinder provided at least with an inlet device (1) according to one of the preceding claims, with at least one exhaust device, and with fuel injection means.
